# FASCICULE DE BREVET EUROPEEN

(11) **EP 3 808 960 B1**
(45) Date de publication et mention de la délivrance du brevet: **04.09.2024**
(21) Numéro de dépôt: 20200386.9
(22) Date de dépôt: 06.10.2020
(51) Int. Cl.: F02D 41/10, F02D 11/10, F02D 31/00, F02D 35/02, F02D 41/00

(54) **PROCÉDÉ DE GESTION DU COUPLE D'UN VÉHICULE AUTOMOBILE COMPORTANT UN MOTEUR À COMBUSTION INTERNE ET ESTIMATION DE L USURE D'UN TEL MOTEUR**
VERFAHREN ZUR STEUERUNG DES DREHMOMENTS EINES KRAFTFAHRZEUGS MIT EINEM VERBRENNUNGSMOTOR, UND SCHÄTZUNG DES VERSCHLEISSES EINES SOLCHEN MOTORS
METHOD FOR MANAGING THE TORQUE OF A MOTOR VEHICLE COMPRISING AN INTERNAL COMBUSTION ENGINE AND ESTIMATE OF THE WEAR OF SUCH AN ENGINE

(30) Priorité: 16.10.2019 FR 1911541
(43) Date de publication de la demande: 21.04.2021
(73) Titulaire: NEW H POWERTRAIN HOLDING, S.L.U., 47008 Valladolid (ES)
(72) Inventeur: THUILLIER, Laurent, 91220 BRETIGNY SUR ORGE (FR)
(74) Mandataire: Renault Group

(56) Documents cités:
- EP-A1- 2 984 319
- EP-A2- 1 890 028
- DE-A1- 102006 003 883
- DE-A1- 102015 205 559

## Description

La présente invention concerne, de manière générale, la suralimentation d'un dispositif de traction comprenant un moteur à combustion interne équipé d'un turbocompresseur.

En particulier, l'invention se rapporte à un procédé de gestion du couple d'un véhicule automobile comprenant un moteur à combustion interne équipé d'un turbocompresseur, et à l'estimation de l'usure d'un tel moteur.

Le fonctionnement d'un moteur à combustion interne repose sur la combustion d'un mélange d'air et de carburant. Sa puissance dépend de la quantité de carburant brûlé pendant un cycle, et par conséquent de la capacité de remplissage de ses cylindres.

Le rendement et les performances du moteur peuvent être augmentés par suralimentation, c'est-à-dire par l'accroissement de la quantité d'air admise dans les cylindres.

La suralimentation est classiquement assurée par un turbocompresseur. Le turbocompresseur comprend une turbine entraînée en rotation par les gaz d'échappement du moteur ainsi qu'un compresseur entraîné par la turbine. Le compresseur augmente la pression Pcol dans le collecteur d'admission et permet ainsi d'augmenter la quantité d'air entrant dans les cylindres et la quantité de carburant injectée dans les cylindres.

Il est également possible d'augmenter la pression Pcyl dans les cylindres via le réglage de la valeur d'avance à l'injection du carburant.

Lorsque le conducteur enfonce la pédale d'accélérateur selon un enfoncement maximale Emax, le véhicule détecte une consigne de couple maximal. La pression Pcol dans le collecteur d'admission et la pression Pcyl dans les cylindres est augmentée jusqu'à une valeur maximale prédéterminée, respectivement Pcol,max et Pcyl,max.

Certains moteurs équipés de turbocompresseur utilisent une fonction de surcouple, dite « over-torque », consistant à augmenter temporairement leur couple maximum (voir par exemple DE102006003883A1).

Pour cela, la pression maximale Pcol,max dans le collecteur d'admission et la pression de cylindre maximale Pcyl,max dans les cylindres sont ajustées et augmentées, respectivement, jusqu'à une pression supérieure Pcol,a dans le collecteur d'admission et une pression de cylindre supérieure Pcyl,a dans les cylindres.

Cependant, l'augmentation de la pression dans les cylindres vers une pression Pcyl,a supérieure à la pression de cylindre maximale Pcyl,max peut provoquer l'usure des coussinets de bielle et engendrer des défaillances du moteur.

Il est donc nécessaire de prendre en considération les conséquences de l'activation de la fonction de surcouple sur l'intégrité du moteur.

L'invention a donc pour but de remédier à ces inconvénients et de proposer un procédé permettant d'exploiter la pression dans les cylindres tout en contrôlant et prévenant les risques de défaillance du moteur, notamment provoquée par l'usure des coussinets de bielle, engendrés par l'activation de la fonction de surcouple.

Il est donc proposé un procédé de gestion du couple d'un moteur à combustion interne d'un véhicule automobile équipé d'un turbocompresseur et estimation de l'usure d'un tel moteur, le procédé comprenant :
la détermination d'une consigne de couple maximal Cmax résultant d'un enfoncement maximal Emax de la pédale d'accélération ;
l'application d'une quantité de carburant maximale Qmax, d'une pression maximale Pcol,max dans le collecteur d'admission et d'une pression maximale Pcyl,max dans les cylindres, pour répondre à la consigne de couple maximal Cmax ;
la détermination d'une consigne de couple ajustée Ca, supérieure à la consigne de couple maximal Cmax ;
l'application, lors de chaque détermination d'une consigne de couple ajustée Ca, d'une quantité de carburant ajustée Qa, d'une pression ajustée Pcol,a dans le collecteur d'admission et d'une pression ajustée Pcyl,a dans les cylindres pour répondre à la consigne de couple ajustée Ca, pendant une durée Δt prédéterminée ; et
le calcul après chaque application d'une consigne de couple ajustée Ca d'une valeur v correspondant à une estimation du niveau d'usure du moteur, la valeur v étant égale à la somme du nombre de tours du moteur mesuré pendant la durée Δt de chaque application de la consigne de couple ajustée Ca multipliée par un coefficient c dépendant de l'écart ΔPcyl entre la pression maximale Pcyl,max et la pression de cylindre ajustée Pcyl,a.

Selon un mode de réalisation, la pression ajustée Pcyl,a dans les cylindres appliquée pour répondre à la consigne de couple ajustée Ca est limitée lorsque la valeur v correspondant à une estimation du niveau d'usure du moteur est supérieure ou égale à un seuil prédéterminé.

Selon un autre mode de réalisation, l'application d'une pression ajustée Pcyl,a dans les cylindres pour répondre à la consigne de couple ajustée Ca est désactivée lorsque la valeur v correspondant à une estimation du niveau d'usure du moteur est supérieure ou égale à un seuil prédéterminé.

De préférence, le coefficient c est variable exponentiellement entre 0 et 1 en fonction de l'écart ΔPcyl entre la pression maximale Pcyl,max et la pression ajustée Pcyl,a dans les cylindres.

De plus, le nombre de tour du moteur peut être mesuré par un compteur, et le compteur peut être remis à zéro lors d'un changement de coussinets de bielle du moteur.

Avantageusement, le coefficient c peut être égal à [exp(ΔPcyl)-1]/[exp(ΔPcyl,max)-1], où ΔPcyl,max correspond à la valeur la plus grande possible de l'écart ΔPcyl entre la pression maximale Pcyl,max et la pression ajustée Pcyl,a dans les cylindres.

D'autres buts, avantages et caractéristiques ressortiront de la description qui va suivre, donnée à titre purement illustratif et faite en référence aux dessins annexés sur lesquels :
[Fig 1] illustre un dispositif de traction pour véhicule automobile comprenant un moteur à combustion interne équipé d'un turbocompresseur.
[Fig 2] est un logigramme illustrant un procédé de gestion du couple d'un moteur à combustion de véhicule automobile comportant un turbocompresseur, conforme à l'invention.

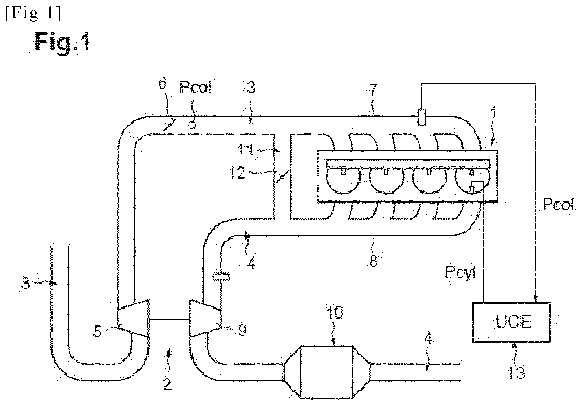

La figure 1 illustre un dispositif de traction pour véhicule automobile comprenant un moteur à combustion 1 et un turbocompresseur 2.

Dans l'exemple illustré, le moteur est un moteur diesel à quatre cylindres comprenant un turbocompresseur à géométrie variable.

Chaque cylindre dans lequel règne une pression Pcyl est avantageusement équipé d'un injecteur pour l'injection de carburant dans le moteur.

Un circuit d'admission 3 permet l'admission d'air dans les cylindres du moteur 1 et un circuit d'échappement 4 permet l'échappement des gaz produits après combustion.

Un compresseur 5 du turbocompresseur est disposé en amont des cylindres et est configuré pour comprimer l'air qui le traverse dans le but d'augmenter la quantité d'air admise dans les cylindres.

Un volet d'admission 6 permet de contrôler l'admission d'air dans un collecteur d'admission 7 du circuit d'admission 3 où règne une pression de suralimentation Pcol.

Après combustion, les gaz d'échappement sortent dans un collecteur d'échappement 8 du circuit d'échappement 4 et se dirigent vers une turbine 9 du turbocompresseur, disposée en aval des cylindres et configurée pour détendre l'air qui la traverse.

Avantageusement, est également disposé un dispositif de dépollution tels qu'un filtre à particules 10, en aval de la turbine 9.

Par ailleurs, le moteur 1 est en outre associé à un circuit 11 de recirculation des gaz d'échappement, servant à réinjecter une partie de ces gaz dans le collecteur d'admission 7 de manière à, en particulier, limiter la quantité d'oxyde d'azote produit tout en évitant la formation de fumée dans les gaz d'échappement. Ce circuit 11 comporte avantageusement une électrovanne 12 qui permet de contrôler le débit de gaz d'échappement recirculés.

De préférence, une unité de commande électronique UCE, désignée par la référence numérique 13, récupère des signaux Pcol et Pcyl de mesure de la pression régnant respectivement dans le collecteur d'admission et dans les cylindres, délivrés par des capteurs de mesure appropriés prévus à cet effet (non représentés). Elle agit sur un organe de réglage de la puissance des gaz d'échappement, par exemple une soupape de décharge ou sur les ailettes de la turbine 9 de manière à réguler la valeur de la pression régnant dans le collecteur d'admission 7 et dans les cylindres.

Dans l'exemple illustré, l'unité UCE 13 assure également le contrôle de fonctionnement du moteur, de manière connue en soi. Elle agit en particulier sur l'électrovanne 12 pour régler la quantité de gaz recirculés et règle le point de fonctionnement du moteur.

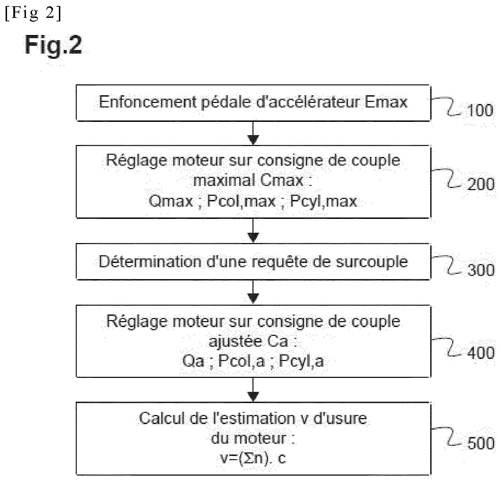

Par ailleurs, la figure 2 illustre un procédé de gestion du couple d'un moteur à combustion interne, tel que le moteur 1, conforme à l'invention.

Lors du roulage du véhicule, le conducteur appuie sur la pédale d'accélérateur et la valeur du couple résultant dépend du degré d'enfoncement de la pédale.

Lorsque la pédale d'accélérateur est enfoncée selon un enfoncement initial Ei, une consigne de couple initiale Ci correspondant à cet enfoncement doit être appliquée au moteur 1.

Par enfoncement initial Ei, on entend un enfoncement de degré inférieur à un enfoncement maximal Emax de la pédale d'accélérateur ou « pied à fond ».

Aussi, par consigne de couple initiale Ci, on entend alors une consigne de couple inférieur à une consigne de couple maximal Cmax.

Pour répondre à la consigne de couple initiale Ci, une quantité de carburant Qi injecté dans les cylindres du moteur 1 et une pression Pcol,i dans le collecteur d'admission 7 sont appliquées.

Lorsque la pédale d'accélérateur est enfoncée selon un enfoncement maximal Emax, une quantité de carburant Qmax est injectée dans les cylindres du moteur 1, puis une pression maximale Pcol,max dans le collecteur d'admission 7 et une pression de cylindre maximale Pcyl,max dans les cylindres sont appliquées, pour répondre à la consigne de couple maximal Cmax.

Par ailleurs, à chaque fois qu'une consigne de couple ajustée Ca, c'est-à-dire une requête de surcouple ou fonction « over-torque », supérieure à la consigne de couple maximal Cmax est détectée, une quantité de carburant ajustée Qa est injectée, puis une pression ajustée Pcol,a dans le collecteur d'admission et une pression ajustée Pcyl,a dans les cylindres sont appliquées, pendant une durée Δt prédéterminée, pour répondre à la consigne de couple ajustée Ca.

La pression maximale Pcyl,max dans les cylindres et la pression ajustée Pcyl,a dans les cylindres pourront être réglées par l'intermédiaire du réglage de l'avance à l'injection.

Après chaque application d'une consigne de couple ajustée Ca, une valeur v représentant le niveau d'usure du moteur est calculée.

A chaque fois qu'une consigne de couple ajustée Ca est appliquée, le nombre de tours effectués par le moteur, lors de la durée Δt pendant laquelle la consigne est ajustée, est mesuré puis ajouté au nombre total obtenu lors d'une ou plusieurs applications de la consigne de couple ajustée Ca précédentes, dans le cas où une ou plusieurs consignes de couple ajustées Ca ont déjà été appliquées.

Dans l'exemple illustré, le nombre de tours effectués par le moteur est mesuré par un compteur.

Afin d'obtenir une estimation de l'usure du moteur via la valeur v, la somme du nombre de tours effectués par le moteur à chaque application de la consigne de couple ajustée Ca est ensuite multipliée par un coefficient c dépendant de l'écart ΔPcyl entre la pression maximale Pcyl,max et la pression ajustée Pcyl,a dans les cylindres.

Dans l'exemple illustré, le coefficient c varie exponentiellement entre 0 et 1 en fonction de l'écart ΔPcyl entre la pression maximale Pcyl,max dans les cylindres et la pression ajustée Pcyl,a dans les cylindres.

Avantageusement, la valeur 1 du coefficient pourra être associée à la valeur ΔPcyl correspondant au plus grand écart ΔPcyl,max entre la pression maximale Pcyl,max dans les cylindres et la pression ajustée Pcyl,a. A l'inverse, la valeur 0 du coefficient pourra être associée à la valeur ΔPcyl correspondant au plus petit écart, voire un écart quasiment nul.

De cette manière, la valeur v calculée, par exemple par un calculateur dans le véhicule automobile, traduit un niveau d'usure du moteur et donne une indication sur les risques de défaillance du moteur.

Plus la valeur v est grande, plus les risques de défaillance du moteur sont probables, liés en particulier à l'usure des coussinets de bielle.

Dans l'exemple illustré, le coefficient c est égal à [exp(ΔPcyl)-1]/[exp(ΔPcyl,max)-1], où ΔPcyl,max correspond à la valeur la plus grande possible de l'écart ΔPcyl entre la pression maximale Pcyl,max et la pression ajustée Pcyl,a dans les cylindres.

Afin de prévenir les risques d'usure du moteur, un seuil de la valeur v peut être prédéterminée.

Selon un mode de réalisation, la pression ajustée Pcyl,a dans les cylindres appliquée lorsque la requête d'une consigne de couple ajustée Ca est déterminée, peut être limitée lorsque la valeur v obtenue est supérieure ou égale à un seuil prédéterminé.

Par exemple, la pression ajustée Pcyl,a dans les cylindres peut être limitée à 2/3 de sa valeur initiale, alors que la quantité de carburant ajustée Qa et la pression ajustée Pcol,a dans le collecteur d'admission peuvent être maintenues à leur valeur initiale.

Selon un autre mode de réalisation, lorsque la valeur v obtenue est supérieure ou égale au seuil prédéterminé, l'application d'une pression de cylindre Pcyl,a dans les cylindres lorsque la requête d'une consigne de couple ajustée Ca est déterminée, peut être désactivée, alors que la quantité de carburant ajustée Qa et la pression ajustée Pcol,a dans le collecteur d'admission peuvent être maintenues à leur valeur initiale.

Le seuil sera avantageusement choisi de manière à éviter tout endommagement du moteur risquant de conduire à des défaillances.

Par exemple, le seuil pourra être déterminé en fonction de tests d'usure du moteur, en particulier des coussinets de bielle, sur un ou une pluralité de points de fonctionnement du moteur.

De préférence, le nombre de tours du moteur est mesuré par un compteur. Le compteur pourra être configuré de sorte que le nombre de tours du moteur soit égal à zéro lorsque le moteur est neuf.

De plus, le compteur pourra être remis à zéro lors du changement des coussinets de bielle du moteur.

## Revendications

1. Procédé de gestion du couple et de l'estimation de l'usure d'un moteur à combustion interne d'un véhicule automobile équipé d'un turbocompresseur et estimation de l'usure d'un tel moteur, le procédé comprenant :
la détermination (100) d'une consigne de couple maximal (Cmax) résultant d'un enfoncement maximal (Emax) de la pédale d'accélération ;
l'application (200) d'une quantité de carburant maximale (Qmax), d'une pression maximale (Pcol,max) dans le collecteur d'admission et d'une pression maximale (Pcyl,max) dans les cylindres, pour répondre à la consigne de couple maximal (Cmax) ;
la détermination (300) d'une consigne de couple ajustée (Ca), supérieure à la consigne de couple maximal (Cmax) ;
l'application (400), lors de chaque détermination d'une consigne de couple ajustée (Ca), d'une quantité de carburant ajustée (Qa), d'une pression ajustée (Pcol,a) dans le collecteur d'admission et d'une pression ajustée (Pcyl,a) dans les cylindres pour répondre à la consigne de couple ajustée (Ca), pendant une durée (Δt) prédéterminée **caractérisée en ce que**
le calcul (500) après chaque application d'une consigne de couple ajustée (Ca) d'une valeur (v) correspondant à une estimation du niveau d'usure du moteur, la valeur (v) étant égale à la somme du nombre de tours du moteur mesuré pendant la durée (Δt) de chaque application de la consigne de couple ajustée (Ca) multipliée par un coefficient (c) dépendant de l'écart (ΔPcyl) entre la pression maximale (Pcyl,max) et la pression de cylindre ajustée (Pcyl,a).

2. Procédé de gestion selon la revendication 1, **caractérisé en ce que** la pression ajustée (Pcyl,a) dans les cylindres appliquée pour répondre à la consigne de couple ajustée (Ca) est limitée lorsque la valeur (v) correspondant à une estimation du niveau d'usure du moteur est supérieure ou égale à un seuil prédéterminé.

3. Procédé de gestion selon la revendication 1, **caractérisé en ce que** l'application d'une pression ajustée (Pcyl,a) dans les cylindres pour répondre à la consigne de couple ajustée (Ca) est désactivée lorsque la valeur (v) correspondant à une estimation du niveau d'usure du moteur est supérieure ou égale à un seuil prédéterminé.

4. Procédé de gestion selon l'une quelconque des revendications précédentes, **caractérisé en ce que** le coefficient (c) est variable exponentiellement entre 0 et 1 en fonction de l'écart (ΔPcyl) entre la pression maximale (Pcyl,max) et la pression ajustée (Pcyl,a) dans les cylindres.

5. Procédé de gestion selon l'une quelconque des revendications précédentes, **caractérisé en ce que** le nombre de tours du moteur est mesuré par un compteur, le compteur étant remis à zéro lors d'un changement de coussinets de bielle du moteur.

6. Procédé de gestion selon l'une quelconque des revendications précédentes, **caractérisé en ce que** le coefficient (c) est égal à [exp(ΔPcyl)-1]/[exp(ΔPcyl,max)-1], où ΔPcyl,max correspond à la valeur la plus grande possible de l'écart (ΔPcyl) entre la pression maximale (Pcyl,max) et la pression ajustée (Pcyl,a) dans les cylindres.

## Patentansprüche

1. Verfahren zum Regeln des Drehmoments und zum Schätzen des Verschleißes eines Verbrennungsmotors eines Kraftfahrzeugs, das mit einem Turboverdichter ausgestattet ist, und Schätzen des Verschleißes eines derartigen Motors, wobei das Verfahren umfasst:
Bestimmen (100) eines maximalen Drehmomentsollwerts (Cmax), der sich aus einem maximalen Niederdrücken (Emax) des Gaspedals ergibt;
Anwenden (200) einer maximalen Kraftstoffmenge (Qmax), eines Maximaldrucks (Pcol,max) in dem Einlasskrümmer und eines Maximaldrucks (Pcyl,max) in den Zylindern als Reaktion auf den maximalen Drehmomentsollwert (Cmax);
Bestimmen (300) eines angepassten Drehmomentsollwerts (Ca), der größer als der maximale Drehmomentsollwert (Cmax) ist;
Anwenden (400), bei jeder Bestimmung eines angepassten Drehmomentsollwerts (Ca), einer angepassten Kraftstoffmenge (Qa), eines angepassten Drucks (Pcol,a) in dem Einlasskrümmer und eines angepassten Drucks (Pcyl,a) in den Zylindern als Reaktion auf den angepassten Drehmomentsollwert (Ca) während einer vorbestimmten Dauer (Δt),
**dadurch gekennzeichnet, dass**
das Berechnen (500) nach jeder Anwendung eines angepassten Drehmomentsollwerts (Ca) eines Werts (v), der einer Schätzung des Verschleißniveaus des Motors entspricht, wobei der Wert (v) gleich der Summe der Anzahl der Motorumdrehungen ist, die während der Dauer (Δt) jeder Anwendung des angepassten Drehmomentsollwerts (Ca), multipliziert mit einem Koeffizienten (c), abhängig von der Differenz (ΔPcyl) zwischen dem Maximaldruck (Pcyl,max) und dem angepassten Zylinderdruck (Pcyl,a), gemessen wird.

2. Regelungsverfahren nach Anspruch 1, **dadurch gekennzeichnet, dass** der angepasste Druck (Pcyl,a) in den Zylindern, der als Reaktion auf den angepassten Drehmomentsollwert (Ca) angewendet wird, begrenzt wird, wenn der Wert (v), der einer Schätzung des Verschleißniveaus des Motors entspricht, größer als oder gleich einem vorbestimmten Schwellenwert ist.

3. Regelungsverfahren nach Anspruch 1, **dadurch gekennzeichnet, dass** die Anwendung eines angepassten Drucks (Pcyl,a) in den Zylindern als Reaktion auf den angepassten Drehmomentsollwert (Ca) deaktiviert wird, wenn der Wert (v), der einer Schätzung des Verschleißniveaus des Motors entspricht, größer als oder gleich einem vorbestimmten Schwellenwert ist.

4. Regelungsverfahren nach einem der vorstehenden Ansprüche, **dadurch gekennzeichnet, dass** der Koeffizient (c) zwischen 0 und 1 exponentiell variiert, abhängig von der Differenz (ΔPcyl) zwischen dem Maximaldruck (Pcyl,max) und dem angepassten Druck (Pcyl,a) in den Zylindern.

5. Regelungsverfahren nach einem der vorstehenden Ansprüche, **dadurch gekennzeichnet, dass** die Drehzahl des Motors durch einen Zähler gemessen wird, wobei der Zähler bei einem Wechsel der Pleuellager des Motors auf null zurückgesetzt wird.

6. Regelungsverfahren nach einem der vorstehenden Ansprüche, **dadurch gekennzeichnet, dass** der Koeffizient (c) gleich [exp(ΔPcyl)-1]/[exp(ΔPcyl,max)-1] ist, wobei ΔPcyl,max dem größtmöglichen Wert der Differenz (ΔPcyl) zwischen dem Maximaldruck (Pcyl,max) und dem angepassten Druck (Pcyl,a) in den Zylindern entspricht.

## Claims

1. Method for managing the torque and estimating the wear of an internal combustion engine of a motor vehicle which is equipped with a turbocharger and estimating the wear of such an engine, the method comprising:
determining (100) a maximum torque setpoint (Cmax) resulting from a maximum depression (Emax) of the accelerator pedal;
applying (200) a maximum fuel quantity (Qmax), a maximum pressure (Pcol,max) in the intake manifold and a maximum pressure (Pcyl,max) in the cylinders in order to meet the maximum torque setpoint (Cmax);
determining (300) an adjusted torque setpoint (Ca) which is greater than the maximum torque setpoint (Cmax);
applying (400), during each time an adjusted torque setpoint (Ca) is determined, an adjusted fuel quantity (Qa), an adjusted pressure (Pcol,a) in the intake manifold and an adjusted pressure (Pcyl,a) in the cylinders in order to meet the adjusted torque setpoint (Ca) for a predetermined period of time (Δt),
**characterized in that**
calculating (500), after each time an adjusted torque setpoint (Ca) is applied, a value (v) corresponding to an estimate of the wear level of the engine, the value (v) being equal to the sum of the number of revolutions of the engine, measured during the period of time (Δt) each adjusted torque setpoint (Ca) is applied, multiplied by a coefficient (c) which depends on the deviation (ΔPcyl) between the maximum pressure (Pcyl,max) and the adjusted cylinder pressure (Pcyl,a).

2. Management method according to claim 1, **characterized in that** the adjusted pressure (Pcyl,a) in the cylinders which is applied in order to meet the adjusted torque setpoint (Ca) is limited when the value (v) corresponding to an estimate of the wear level of the engine is greater than or equal to a predetermined threshold.

3. Management method according to claim 1, **characterized in that** applying an adjusted pressure (Pcyl,a) in the cylinders in order to meet the adjusted torque setpoint (Ca) is deactivated when the value (v) corresponding to an estimate of the wear level of the engine is greater than or equal to a predetermined threshold.

4. Management method according to any of the preceding claims, **characterized in that** the coefficient (c) is variable exponentially between 0 and 1 depending on the difference (ΔPcyl) between the maximum pressure (Pcyl,max) and the adjusted pressure (Pcyl,a) in the cylinders.

5. Management method according to any of the preceding claims, **characterized in that** the number of revolutions of the engine is measured by a counter, the counter being reset to zero when the connecting rod bearings of the engine are changed.

6. Management method according to any of the preceding claims, **characterized in that** the coefficient (c) is equal to [exp(ΔPcyl)-1]/[exp(ΔPcyl,max)-1], where ΔPcyl,max corresponds to the largest possible value of the deviation (ΔPcyl) between the maximum pressure (Pcyl,max) and the adjusted pressure (Pcyl,a) in the cylinders.
